(19)

Europäisches Patentamt
European Patent Office
Office européen des brevets

(11) Numéro de publication: **0 159 948**
**B1**

(12) # FASCICULE DE BREVET EUROPÉEN

(45) Date de publication du fascicule du brevet: **10.08.88**

(21) Numéro de dépôt: **85400752.3**

(22) Date de dépôt: **16.04.85**

(51) Int. Cl.[4]: **A 01 B 63/114,** A 01 B 59/06, A 01 B 59/042

(54) **Dispositif d'attelage pour un outil, notamment agricole, destiné à être porté par un tracteur.**

(30) Priorité: **17.04.84 FR 8406046**

(43) Date de publication de la demande: **30.10.85 Bulletin 85/44**

(45) Mention de la délivrance du brevet: **10.08.88 Bulletin 88/32**

(84) Etats contractants désignés: **DE GB**

(56) Documents cité:
**EP-A-0 057 571**
**GB-A-1 422 134**
**GB-A-2 105 966**
**US-A-2 888 997**
**US-A-3 432 184**
**US-A-3 658 133**
**US-A-4 031 963**

(73) Titulaire: **Defrancq, Hubert, 6, rue du Moulin, F-51140 Jonchery s/Vesle (FR)**

(72) Inventeur: **Defrancq, Hubert, 6, rue du Moulin, F-51140 Jonchery s/Vesle (FR)**

(74) Mandataire: **Michardière, Bernard, C/O CABINET PEUSCET 68, rue d'Hauteville, F-75010 Paris (FR)**

**EP 0 159 948 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

L'invention est relative à un dispositif d'attelage pour un outil, notamment agricole, destiné à être porté par un tracteur, ledit outil étant muni de moyens d'accrochage à un système de levage, du type à trois points, du tracteur, comprenant un support intermédiaire prévu entre le système de levage du tracteur et les moyens d'accrochage de l'outil, ce support intermédiaire comportant, en partie haute, un point d'accrochage destiné à être relié au point haut des moyens d'accrochage et, en partie basse, des moyens d'attache situés vers ses extrémités transversales et destinés à être reliés aux points d'accrochage bas de l'outil.

Un dispositif d'attelage de ce genre est connu, notamment d'après US-A-2 888 997. Le dispositif d'attelage montré par ce document comprend un support intermédiaire fixé sur le système de levage du tracteur, tandis que l'outil est relié à ce support intermédiaire, aussi bien en partie haute qu'en partie basse, par des biellettes articulées. Un jeu important est prévu au niveau de l'articulation de chaque biellette inférieure pour permettre des mouvements de basculement relatif, notamment d'un côté ou de l'autre, du support intermédiaire et de l'outil. Ce dernier est done monté en quelque sorte "flottant" et si une zone de cet outil rencontre un sol plus dur que celui rencontré par l'autre extrémité de l'outil, ce dernier bascule de telle sorte que la partie attaquant le sol plus dur se soulève, alors que l'autre extrémité s'enfonce dans le sol plus tendre. On obtient ainsi un équilibrage de la force de traînée sur le tracteur et on réduit la composante latérale de la traînée.

Toutefois, la qualité du travail du sol par l'outil n'est pas optimale car le travail n'est pas effectué à une profondeur pratiquement constante sur toute la surface du sol. La rapidité et la précision avec laquelle les mouvements de l'outil sont effectués demandent à être améliorées.

En résumé, on peut dire qu'un dispositif selon US-A-2 888 997 permet d'obtenir une certaine liberté de l'outil, mais la possibilité de mouvements verticaux individualisés entraîne une variation de profondeur, une instabilité et une complexité de fabrication. Ce dispositif autorise des basculements autour d'une multitude d'axes virtuels sensiblement verticaux et longitudinaux, par suite des mouvements alternatifs des biellettes.

Un tel dispositii ne peut fonctionner correctement s'il est placé à l'avant du tracteur, de manière à être poussé, compte tenu des équilibres instables en position poussée. Un axe théorique virtuel lié à la recherche spontanée d'un équilibre stable n'existera pas en poussée. Il y aura blocage dans une position donnée.

On connaît également un dispositif selon FR-A-1 284 856 destiné à permettre aux outils larges de mieux suivre le profil du sol, indépendamment du tracteur. Toutefois, ce dispositif ne permet pas de bien contrôler la stabilité de l'outil en position levée, ce qui est genant. En outre, la répartition des charges sur l'outil, ainsi que la rapidité et la précision avec lesquelles les mouvements de l'outil sont effectués demandent à être améliorées.

GB-A-1 422 134 montre un dispositif d'accrochage faisant intervenir une platine spéciale, et ne permettant pas de s'accrocher directement au dispositif à trois points d'un tracteur.

L'invention a pour but, surtout, de rendre les dispositifs d'attelage du genre défini précédemment tels qu'ils répondent mieux que jusqu'à présent aux diverses exigences de la pratique et notamment tels qu'ils ne présentent plus, ou à un degré moindre, les inconvénients rappelés ci-dessus.

On souhaite, en particulier, qu'un dispositif d'attelage conforme à l'invention permette d'atteindre les buts suivants:

- possibilité de montage à l'avant du tracteur (poussée) ou à l'arrière (traction) tout en conservant un fonctionnement satisfaisant:
- possibilité d'assurer une bonne stabilité de l'outil en position levée :
- obtention d'une bonne répartition des charges sur l'outil, avec des mouvements rapides et précis de l'outil pour suivre le sol à profondeur constante.

Selon l'invention, un dispositif d'attelage pour un outil, notamment agricole, du genre défini précédemment, est caractérisé par le fait que, d'une part, le support intermédiaire est rigide et comporte, en partie haute, deux points d'accrochage situés aux extrémités transversales et reliés, respectivement, par deux moyens de liaison extensibles au point haut du système de levage du tracteur, ces moyens de liaison étant propres à assurer la transmission des efforts pour le levage de l'outil porté par le tracteur, le point d'accrochage pour l'outil formant un troisième point situé à mi-distance des points extrêmes, que d'autre part, en partie basse, les deux points d'attache sont realisés d'une manière semblable aux points d'attache classiques du tracteur de telle sorte que les points d'accrochage bas de l'outil peuvent être recus dans ces points d'attache, et que d'autre part enfin, ledit support comporte, au milieu de sa partie basse, un moyen d'articulation à axe géometrique longitudinal propre à coopérer avec un moyen d'articulation complémentaire solidaire d'une barre transversale supportée rotative autour de son axe géometrique par les deux points bas d'accrochage du système de levage du tracteur, ce moyen d'articulation étant l'unique liaison du support en partie basse, l'ensemble permettant des mouvements de basculement de l'outil autour des deux axes.

Selon une première possibilité, les moyens de liaison comprennent des moyens de commande des mouvements de l'outil d'une manière autonome par rapport au système de levage, ces moyens de commande étant combinés avec des moyens sensibles à la position de l'outil par rapport au sol de telle sorte que les informations fournies par ces moyens sensibles soient utilisés pour l'actionnement des susdits moyens de commande.

L'utilisation de tels moyens de commande permet de gérer un transfert de charge de l'outil vers le tracteur, à partir d'informations, issues de capteurs, sur la position de l'outil par rapport au sol.

Selon une autre possibilité, les moyens de liaison sont formés par des biellettes télescopiques qui, en position relevée du système de levage, prennent leur longueur maximale et viennent en butée fin de course, l'outil étant alors équipé de roues de jauge.

Avantageusement le moyen d'articulation à axe géométrique longitudinal comprend un axe d'articulation longitudinal, tandis que le moyen d'articulation complémentaire comprend un alésage prévu dans un cylindre solidaire de la barre transversale.

De préférence, l'axe d'articulation longitudinal est situé au-dessous de la barre transversale.

Dans le cas d'un outil large comportant deux roues de jauge prévues de chaque côté de l'outil, dans le sens transversal, et sur lesquelles s'exerce une partie de la charge générée par l'outil, les susdits moyens sensibles à la position de l'outil par rapport au sol peuvent comprendre, pour chaque roue de jauge, un capteur d'effort propre à déterminer les charges portées par la roue, les informations fournies par chaque capteur servant à l'actionnement des moyens de commande.

De préférence les moyens de commande sont propres à intervenir de telle sorte que la charge supportée par chaque roue de jauge reste sensiblement constante et égale à une valeur prédéterminée, notamment réglable, comprise entre un seuil mini et un seuil maxi, la charge supplémentaire étant transférée vers le tracteur. Généralement, les valeurs de charge adoptées pour chaque roue de jauge sont égales.

Les moyens de commande peuvent comprendre au moins deux moyens de commande élémentaires propres à développer, chacun, une force de commande, destinée à être transmise à l'outil, ayant une composante suivant la direction longitudinale, ou direction d'avance de l'outil, et une composante suivant la direction transversale, au moins deux moyens sensibles à la position de l'outil par rapport au sol étant prévus et associés respectivement aux moyens de commande élémentaires.

Les deux moyens élémentaires de commande sont avantageusement formés par deux vérins dont les axes sont concourants, l'extrémité de ces vérins située vers le point de concours étant reliée à un point haut du système de levage à trois points du tracteur, tandis que les deux autres extrémités de ces vérins sont reliées, respectivement, à deux points difiérents, écartés l'un de l'autre suivant la direction transversale, et décalés suivant la direction longitudinale par rapport au susdit point haut, les susdits deux points différents étant reliés rigidement entre eux et, lorsque l'outil est attelé, étant reliés rigidement à cet outil.

Avantageusement, le support intermédiaire forme une sorte de cadre, comportant en partie haute trois points d'accrochage rigidement reliés entre eux, les deux points extrêmes dans le sens transversal constituant les susdits deux points dittérents auxquels sont reliés les moyens de liaison, tandis que le troisième point d'accrochage, généralement situé à mi-distance des deux points extrêmes, est relié, notamment par une biellette articulée ou analogue, au point haut des moyens d'accrochage de l'outil. Le support comporte, à sa partie basse, deux autres points d'attache, de chaque côté, pour recevoir les deux points d'accrochage bas de l'outil, cette partie basse du support étant montée, dans sa partie médiane, sur les moyens d'articulation autorisant un basculement du support suivant au moins deux directions non parallèles, notamment orthogonales, parallèles ou sensiblement parallèles au sol.

Le support est muni, au milieu de sa partie basse, du moyen d'articulation à axe longitudinal, destiné à se trouver sensiblement horizontal alors que le plan moyen du support est sensiblement vertical, propre à coopérer avec le moyen d'articulation complémentaire solidaire de la barre transversale destinée à être supportée par les deux points bas d'accrochage du système de levage à trois points du tracteur, cette barre étant elle-même montée rotative autour de son axe transversal.

Avantageusement, la liaison entre les extrémités des moyens de liaison situées vers leur point de concours, avec le point haut du système de levage à trois points du tracteur, comprend une pièce secondaire, prévue pour être accrochée à ce point haut du système de levage du tracteur, et comportant deux chapes solidaires l'une de l'autre et formant entre elles un angle correspondant à celui des moyens de liaison, lesdites extrémités des moyens de liaison étant accrochées sur ces chapes.

Un tel dispositif d'attelage peut être prévu soit à l'arrière du tracteur, pour un outil situé à l'arrière, soit à l'avant du tracteur, auquel cas l'outil est poussé par le tracteur, soit à la fois à l'avant et à l'arrière du tracteur pour un outil poussé et pour un autre outil tiré.

L'invention consiste, mises à part les dispositions exposées ci-dessus, en certaines autres dispositions dont il sera plus explicitement question ci-après à propos d'un mode de réalisation particulier décrit avec référence aux dessins ci-annexés, mais qui n'est nullement limitatif.

La figure 1, de ces dessins, est un schéma d'ensemble d'un tracteur, équipé d'un outil large, poussé, vu de l'avant, pour illustrer le mouvement de l'outil par rapport au tracteur.

La figure 2 est un schéma, en perspective, d'un dispositif d'attelage conforme à l'invention, monté entre le système de levage du tracteur et les moyens d'accrochage de l'outil.

La figure 3 est une vue de côté du dispositif d'attelage selon l'invention.

La figure 4 est une vue de dessus par rapport à la figure 3.

La figure 5, einfin, est un schéma illustrant une réalisation des moyens sensibles à la charge supportée par une roue de jauge de l'outil.

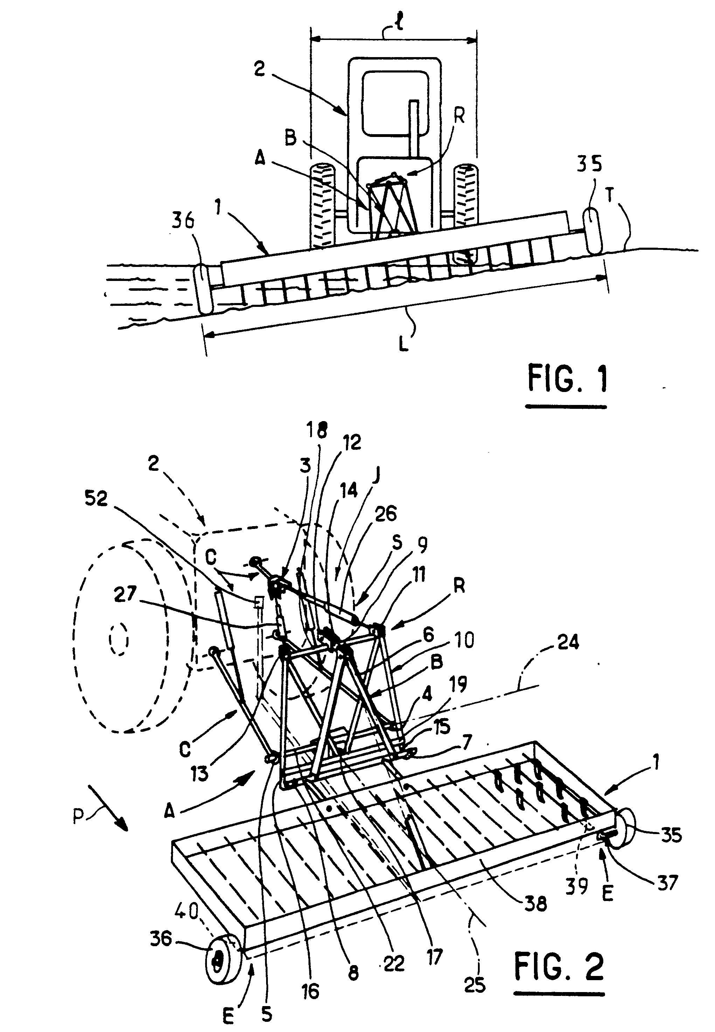

En se reportant aux dessins, notamment aux figures 1 et 2, on peut voir un dispositif d'attelage A pour un outil agricole ou aratoire 1 relativement large, destiné à être porté par un tracteur 2. La largeur L de l'outil peut être nettement supérieure à la largeur 1 du tracteur. Comme exemple d'outil 1, on peut indiquer les chisels, les effeuilleuses, les arracheuses.

L'outil 1 est muni de moyens d'accrochage B à un système de levage C du type à trois points du tracteur 2. Le dispositif d'attelage comporte des moyens de raccordement R prévus entre le système de levage C du tracteur et les moyens d'accrochage B de l'outil, ces moyens de raccordement R étant agencés pour autoriser des mouvements de l'outil lui permettant de rester sensiblement parallèle au sol, au niveau de l'outil.

Ainsi, comme représenté sur la figure 1, si la configuration du sol au niveau de l'outil est différente de celle au niveau du tracteur, l'outil peut prendre une inclinaison par rapport au tracteur, pour suivre le profil du sol.

Les moyens de raccordement R comprennent, entre les moyens d'accrochage B et le système de levage C, des 20 moyens de liaison J permettant à l'outil 1 d'effectuer des mouvements de basculement autour d'au moins deux axes 24, 25 non parallèles entre eux mais parallèles ou sensiblement parallèles au sol T.

Avantageusement, les moyens de liaison J comprennent des moyens de commande S des mouvements de l'outil d'une manière autonome par rapport au système de levage C du tracteur, ces moyens de commande S étant combinés avec des moyens E sensibles à la position de l'outil 1 par rapport au sol T, de telle sorte que les informations fournies par ces moyens sensibles E soient utilisées pour l'actionnement des susdits moyens de commande S.

Le système de levage C du tracteur classique est du type à trois points, un point haut 3 et deux points bas 4, 5. Le point haut 3 peut être formé par une chape prévue à l'extrémité d'un bras qui peut être relevé ou abaissé dans un plan longitudinal ou vertical. Les points 4 et 5 sont prévus aux extrémités de deux bras longitudinaux, articulés sur le tracteur. Les points d'accrochage 4 et 5 peuvent être du type à rotule.

Les moyens d'accrochage B de l'outil 1 comprennent, par exemple, un cadre triangulaire rigide 6 solidaire du châssis de l'outil 1. Ce cadre 6 comprend un côté horizontal inférieur, formant base, dont les extrémités transversales 7, 6 pourraient être accrochées, pour le cas où le dispositif d'attelage a conforme à l'invention ne serait pas utilisé, directement sur les points 4 et 5 du système de levage du tracteur. Le cadre 6, dont la forme est celle d'un triangle isocéle, a ses deux côtés égaux qui convergent vers le sommet 9 muni, par exemple, d'une chape. Toujours dans l'hypothèse où le dispositif d'attelage A de l'invention ne serait pas utilisé, ce sommet 9 serait directement relié par une barre ou une biellette rigide au point haut 3 du système de levage du tracteur.

On comprend que tous les mouvements transmis au cadre 6, lié rigidement à l'outil 1, sont transmis à cet outil.

Les moyens de raccordement R, selon l'invention, comprennent un support intermédiaire 10 formant également une sorte de cadre, ce support comportant en partie haute trois points d'accrochage 11, 12, 13 rigidement liés l'un à l'autre. Les deux points 11, 13 situés aux extrémités transversales sont reliés aux susdits moyens de commande S tandis que le troisième point d'accrochage 12 situé à mi-distance des points extrêmes 11, 13 est relié par une biellette 14, rigide, au point haut 9 des moyens d'accrochage B de l'outil. Les points d'accrochage 11, 12 et 13 peuvent être formés par des chapes.

Le support 10 comporte, à sa partie basse, deux autres points d'attache 15, 16 situés à ses extrémités transversales. Ces points d'attache 15 et 16 sont réalisés d'une manière semblable aux points d'attache 4 et 5 classiques du tracteur de telle sorte que les points d'accrochage bas 7 et 8 de l'outil 1 puissent être reçus dans ces points d'attache 15 et 16, sans aucune adaptation nécessaire.

Le support 10 est muni, au milieu de sa partie inférieure, d'un axe d'articulation 17 longitudinal c'est-à-dire parallèle à la direction d'avance P, schématisée par une flèche, de l'outil 1. L'axe 17 est perpendiculaire au plan moyen du support 10, ce plan moyen étant destiné à être sensiblement vertical et transversal par rapport à ladite direction d'avance P.

Le support 10 est construit de manière à présenter une grande rigidité et peut être formé par une structure triangulée comme visible sur la figure 2. Il comprend une barre rigide supérieure horizontale 18 dont les points d'attache 11, 12, et 13 sont solidaires et une barre horizontale inférieure 19 rigide, solidaire de l'axe 17 et munie à ses extrémités des points d'attache 15 et 16. Des barres diagonales relient respectivement le point 11 au point 15 et à une extrémité de l'axe 17 tandis que deux 20 autres barres diagonales relient le point 13 à ladite extrémité de l'axe 17 et à l'autre point d'accrochage 16. Les quatre barres diagonales du support 10 forment une sorte de M majuscule comme visible sur la figure 2.

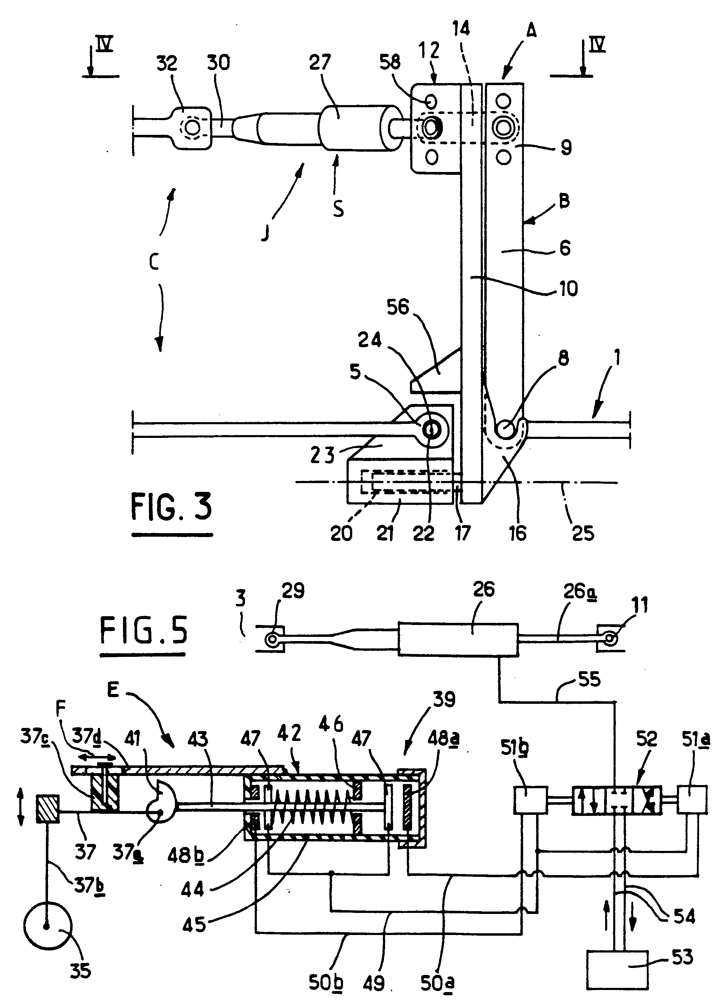

L'axe longitudinal 17 est reçu dans un moyen d'articulation complémentaire formé par un alésage 20 (fig. 3) prévu dans un cylindre 21 solidaire d'une barre transversale 22 destinée à s'accrocher et à être supportée par les deux points bas d'accrochage 4 et 5 du système de levage C du tracteur. L'axe 17 est situé de préférence au-dessous de la barre 22 permettant le passage d'une transmission de prise de force au-dessus de cet axe 17 et entre la triangulation de l'outil et des moyens de raccordement. La position de l'axe 17 est choisie de manière à ne pas entrainer de problème de garde au sol pendant le travail. Comme visible 35 sur la figure 3, le cylindre 21 est situé au-dessous de la barre 22 et est fixé sur cette barre par exemple par des goussets tels que 23 notamment soudés sur ladite barre et sur le cylindre. La barre 22 est montée sur les points d'accrochage 4 et 5 de telle sorte qu'elle puisse tourner autour de l'axe géométrique transversal 24, par rapport au systéme de levage C du tracteur.

Le support 10 peut en outre tourner autour de l'axe géométrique longitudinal 25 du cylindre 21 et de l'axe 17.

Les axes géométriques 24 et 25, non parallèles entre eux, sont parallèles, ou sensiblement parallèles, au sol T. Les mouvements de l'outil 1, pour rester parallèle au sol, se composent de basculements autour de ces deux axes.

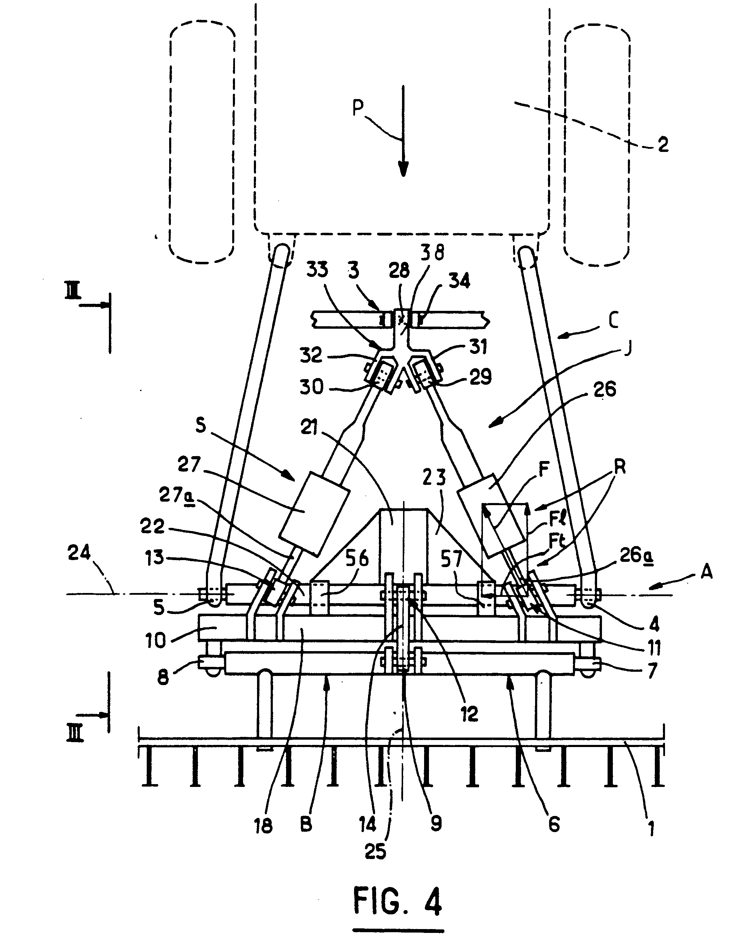

Les moyens de commande S des mouvements de l'outil 1 comprennent deux moyens de commande élémentaires formés respectivement par deux vérins 26, 27 propres à développer, chacun, une force de commande telle que F (figure 4), destinée à être transmise à l'outil 1 et ayant une composante Fl suivant la direction longitudinale, ou direction d'avance P de l'outil, poussé ou tiré, et une composante Ft suivant la direction transversale.

Les axes des deux vérins 26, 27 sont concourants vers un point géométrique 28 (figure 4) avantageusement situé au centre de la chape constituant le point d'accrochage haut 3.

Les deux vérins 26, 27 peuvent être disposés de telle sorte que le plan de leurs axes concourants soit horizontal lorsque le tracteur 2 et l'outil 1 se déplacent sur une même surface plane horizontale mais cette caractéristique n'est pas indispensable. Les deux vérins 26 et 27 pourraient être inclinés par rapport au plan horizontal.

L'extrémité de chaque vérin, située vers le point de concours 28, est reliée au point haut 3 du système de levage C. Cette extrémité, pour chaque vérin, peut être formée par l'extrémité 29, 30 d'une vis réglable autorisant l'ajustement de la longueur mini ou maxi du moyen de commande. Chaque extrémité est équipée d'une rotule propre à être reçue entre les branches de deux chapes femelles respectives 31, 32, solidaires l'une de l'autre et formant entre elles un angle correspondant à celui des vérins. Les chapes 31, 32 font partie d'une pièce secondaire 33 qui comporte une chape mâle 38 propre à être reçue dans une chape femelle constituant le point d'accrochage 3. La liaison entre les diverses chapes mâles et femelles est assurée par des axes transversaux tels que 34, orthogonaux aux efforts transmis entre les chapes.

De préférence, les vérins 26 et 27 lorsque le tracteur et l'outil roulent sur une surface plane horizontale, sont symétriques l'un de l'autre par rapport à un plan vertical longitudinal passant par le point 28. Les points d'attache 11 et 13 sont également symétriques par rapport à ce plan longitudinal, et sont réalisés sous la forme de chapes, comme visible sur la figure 4, solidaires, notamment par soudure, du support 10, et orientée s suivant la direction inclinée du vérin associé. Les tiges 26a, 27a des vérins 26, 27 sont munies à leurs extrémités de rotules accrochées aux points 11 et 13.

L'outil 1 comporte deux roues de jauge 35, 36 (figure 2) prévues de chaque côté de l'outil, dans le sens transversal. Si l'outil 1 était situé à l'arrière du tracteur et tiré par celui-ci, les roues de jauge 35 et 36 se trouveraient à l'arrière de l'outil 1. Dans le cas envisagé d'un outil poussé par le tracteur et monté à l'avant de ce tracteur, les roues de jauge se trouvent en avant dudit outil. Une partie de la charge de l'outil 1, due au poids et aux effets dynamiques, s'exerce sur ces roues de jauge 35, 36.

Sur les schémas des figures 2 et 5, on a représenté des roues de jauge 35, 36 montées à l'extrémité d'un bras 37 longitudinal, sensiblement parallèle à la direction P, ce bras étant articulé autour d'un axe transversal 37a schématiquement représenté. La roue 35, 36, peut être montée à l'extrémité inférieure d'une tige 37b verticale fixée, notamment de manière réglable suivant le sens vertical, à l'extrémité du bras 37 éloignée de l'axe 37a. Des moyens élastiques formés par un bloc 37c de matière élastique, par exemple élastomère, sont prévus entre le bras 37 et une butée 37d solidaire du bâti de l'outil 1 pour autoriser le débattement du bras 37 tout en le limitant. Le bloc 37c dans l'exemple considéré travaille en compression. La position de ce bloc 37c est avantageusement réglable suivant la direction longitudinale matérialisée par la double flèche F sur la figure 5. Le réglage de la position du bloc 37c permet de régler la charge supportée par la roue 35.

Les moyens E (voir figures 2 et 5) sensibles à la position de l'outil 1 par rapport au sol T, sont constitués, avantageusement, par la roue de jauge 35, 36 comprenant un capteur d'effort propre à déterminer les charges supportées par la roue associée, les informations fournies par chaque capteur servant à l'actionnement des moyens de commande S.

Dans l'exemple représenté sur la figure 5, le capteur d'effort 39 pour la roue 35 (ou 40 pour la roue 36) comprend une came 41 liée en rotation au bras 37 supportant la roue et un contact électrique 42 comprenant un palpeur 43 qui appuie contre la came 41.

Le palpeur 43 est poussé contre la came 41 par un ressort 44 logé dans un boîtier 45 lié au châssis de l'outil 1; le ressort 44 est en appui à une extrémité contre une butée 46. Dans l'exemple représenté sur la figure 5, en position de repos le contact 42 est ouvert; le contact électrique peut s'établir entre la pastille 47, (formée par exemple de deux pastilles élémentaires écartées l'une de l'autre portées par le palpeur 43) et les pastilles 48a, 48b liées au boîtier 45; ces pastilles sont

convenablement isolées par rapport aux pièces voisines. Le contact entre les pastilles 47, 48a se ferme lorsque la charge supportée par la roue 35 dépasse la limite prédéterminée, car la rotation de la came 41, dans le sens des aiguilles d'une montre selon la représentation de la figure 5, provoque le déplacement de la tige 43 vers la droite du dessin de la figure 5 jusqu'à la fermeture du contact. Le contact entre les pastilles 47 et 48b se ferme lorsque la charge supportée par la roue 35 devient trop faible, ce qui provoque un mouvement du palpeur 43 dans l'autre sens.

Les trois pastilles 47, 48a, 48b, du contact électrique sont reliées par des conducteurs de liaison électrique 49, 50a, 50b à deux ensembles de commande 51a, 51b par exemple des électroaimants, agissant sur un distributeur 52 de fluide hydraulique sous pression, destiné à contrôler l'alimentation du vérin 26 associé à la roue 35.

Une installation semblable de commande est prévue pour l'autre roue 36 et le vérin 27 associé.

Le fluide hydraulique sous pression provient d'une source 53 reliée par des canalisations appropriées 54 à des orifices du distributeur 52.

Le vérin 26 peut être du type à simple effet et une seule chambre de ce vérin est reliée par une canalisation 55 à un orifice de l'électrodistributeur 52. Le vérin 26 travaille au raccourcissement, c'est-à-dire que lorsque le liquide sous pression est admis dans la chambre du vérin, la tige 26a de ce dernier rentre dans le cylindre. Le rappel du vérin, lorsque la canalisation 55 est reliée à la bâche, est assuré par la charge à l'encontre de laquelle le vérin est destiné à agir, cette charge provoquant la sortie de la tige 26a.

L'ensemble est agencé de telle sorte que lorsque les contacts électriques sont ouverts, l'électrodistributeur 52 est dans une position de fermeture et le fluide hydraulique est emprisonné dans la chambre du vérin 26 de telle sorte que le piston et la tige de piston de ce vérin ne peuvent se déplacer en translation par rapport au cylindre du vérin, sous l'effet de la charge.

Si le contact entre la pastille 47, et la pastille 48b vient à se fermer, c'est-à-dire si la came 41 tourne dans le sens des aiguilles d'une montre d'un angle suffisant pour provoquer cette fermeture, ce qui correspond à une diminution de la charge supportée par la roue 35, l'électrodistributeur 52 est commandé par la bobine 51b de telle sorte que la chambre du vérin 26 soit reliée à la bâche ce qui provoque une sortie de la tige de piston 26a du cylindre de ce vérin et une augmentation de la distance entre les points 3 et 11 (figure 4). Cette modification provoque une augmentation de la charge sur la roue 35. Lorsque cette augmentation est suffisante, le contact entre les pastilles 47 et 48b s'ouvre et le distributeur 52 revient à sa position fermée.

Si, par suite d'une augmentation de la charge sur la roue 35, la came 41 tourne dans le sens des aiguilles d'une montre, le contact entre les pastilles 47 et 48a va se fermer et l'électrodistributeur 52 va être commandé par la bobine 51a et se déplacer dans le sens qui provoque l'admission du liquide sous pression dans la chambre du vérin 26. Il en résulte que la tige de ce vérin va rentrer dans le cylindre et la distance entre les points 3 et 11 (figure 4) va diminuer, ce qui provoque une diminution de la charge sur la roue 35 jusqu'à ce que la valeur prédéterminée soit obtenue, et un transfert du surplus de charge de l'outil vers le tracteur.

Ainsi, les moyens de commande S permettent de faire supporter par chaque roue de jauge 35, 36 une charge sensiblement constante. De préférence, on règle les moyens de commande S de telle sorte que la charge supportée par la roue 35 soit égale à celle supportée par la roue 36.

Il est clair que d'autres types de capteurs d'effort que celui représenté sur la figure 5 peuvent être utilisés. On pourrait prévoir des jauges de contrainte montées directement sur le bras ou sur le montant supportant les roues de jauge 35, 36. Il convient de noter qu'avec les capteurs d'effort tels que 39, 40 on peut détecter des variations de charge sur les roues de jauge auxquelles correspondent des variations de hauteur de l'outil par rapport au sol T, relativement faibles, par exemple de l'ordre du centimètre ou même de l'ordre de quelques millimètres. Ainsi, les capteurs d'effort tels que 39, 40 permettent de détecter avec précision la charge transférée vers le tracteur sans altérer la position par rapport au sol.

Ceci étant, la mise en oeuvre et le fonctionnement du dispositif d'attelage conforme à l'invention sont les suivants.

L'accrochage de l'outil 1 sur le tracteur 2 résulte immédiatement des explications précédentes.

Disposant d'un tracteur 2 classique et de l'outil 1 muni de son cadre 6 d'accrochage et du dispositif d'attelage A de l'invention, on met tout d'abord en place, sur le point haut 3 d'accrochage du système de levage C du tracteur, la pièce intermédiaire 33 comportant les chapes 31, 32. On met ensuite en place la barre 22 en l'accrochant aux deux points bas 4, 5 du système de levage C du tracteur. On accroche les extrémités 29, 30 des tiges solidaires des fonds de vérins 26, 27 aux chapes 31, 32, à l'aide d'axes tels que 34. On met ensuite en place le support 10 en introduisant l'axe 17 dans l'alésage 20 supporté par la barre 22 et en accrochant les points 11 et 13 de ce support 10 aux 25 tiges 26a, 27a, des vérins 26 et 27. Il est à noter que selon une variante, l'axe 17 peut être bloqué, de manière démontable, suivant la direction longitudinale, par rapport à l'alésage 20; le support 10 et la barre 22 forment alors un ensemble.

L'outil est ensuite fixé, par son cadre 6, sur le support 10, les trois points 7, 8 et 9 de ce cadre 6 étant accrochés aux points 15, 16 et 12 dudit support 10.

On effectue ensuite la liaison électrique entre les capteurs 39, 40 des roues 35 et 36 de l'outil avec les bobines de commande telles que 51a, 51b des électrodistributeurs tels que 52 commandant les vérins tels que 26, 27. On réalise enfin la liaison hydraulique, notamment par des canalisations flexibles, d'une part entre chaque électro-distributeur 52 et le vérin associé 26, 27 et, d'autre part, entre la source de liquide sous pression 53, notamment formée par la centrale hydraulique du tracteur, et ces électrodistributeurs.

On a supposé que l'outil 1 était équipé, au préalable, des capteurs 39, 40 pour chaque roue de jauge 35, 36. Il est clair que l'on peut prévoir des capteurs 39, 40 rapidement adaptables sur les montants ou supports de roues 35 pour permettre l'utilisation d'un outil 1 non équipé de tels capteurs.

Le fonctionnement du dispositif d'attelage est le suivant.

On suppose, par exemple, qu'au cours du travail de l'outil 1 poussé (ou tiré) par le tracteur 2, la charge supportée par la roue 35 dépasse la valeur limite établie par le capteur 39. Dans ces conditions, comme expliqué précédemment avec référence à la figure 5, l'électrodistributeur 52 va être actionné de telle sorte que la chambre du vérin 26 soit reliée au conduit 54 d'arrivée de fluide sous pression et la distance entre les points 3 et 13 (figure 2) va diminuer. Cela provoque un basculement de l'outil tel que la charge supportée par la roue de jauge associée est réduite.

En effet, en raison de l'inclinaison de l'axe du vérin 26 par rapport à la direction longitudinale et à la direction transversale (figure 4) la force exercée par le vérin 26 fait apparaître une composante Fl et une composante Ft.

Le moment de la composante transversale Ft par rapport à l'axe 25 provoque, selon la représentation de la figure 2, une rotation du support 10 et donc un basculement de l'outil 1, autour de cet axe 25, dans le sens contraire des aiguilles d'une montre, vu de l'arrière de l'outil 1, de telle sorte que la charge supportée par la roue 35 diminue.

Le moment de la composante longitudinale Fl par rapport à l'axe 24 de la barre transversale 22 provoque un basculement du support 10 autour de cet axe 24 de telle sorte que le point 11 se rapproche du point 3 et du tracteur 2. Ce mouvement, transmis au cadre 6 et à l'outil 1 soulage également la roue 35. On comprend que le système agit de telle sorte que la charge sur la roue 35 soit maintenue à la valeur prédéterminée.

Dans le cas où la charge supportée par la roue 35 deviendrait trop faible, des mouvements inverses seraient commandés par le vérin 26 pour rétablir la charge à la valeur souhaitée.

Il en est de même pour la roue 36.

Ainsi, le dispositif conforme à l'invention permet de commander positivement le maintien de l'outil 1 parallèle au sol en assurant des charges sensiblement constantes sur les roues de jauge 35, 36, ces charges étant de préférence égales. On pourrait, si on le souhaitait, annuler pratiquement la charge supportée par les roues 35, 36 en réglant les capteurs 39 et 40 à cet effet; dans ce cas, la totalité du poids de l'outil serait supportée par le tracteur.

En tarant les capteurs 39 et 40, notamment en tarant le ressort 44, on peut adapter le dispositif d'attelage et sa commande en fonction de la nature du sol travaillé par l'outil. Par exemple, pour un sol dur, le tarage du ressort 44 correspondra à une valeur plus élevée et donc à une charge sur la roue 35 plus importante ce qui permet de lisser les informations recueillies par les capteurs et d'écarter des variations instantanées telles que celles provoquées par des nottes dures de terre, liées à l'état de la surface. La charge supportée par le tracteur est alors moins importante, mais cela n'est pas gênant car le tracteur a une bonne adhérence, du fait que le sol est dur.

Dans le cas d'un sol humide, on règle les capteurs 39 et 40 de telle sorte que la charge supporté par les roues 35 et 36 soit relativement faible pour augmenter l'adhérence du tracteur, le problème du lissage des informations fournies par les capteurs étant moins aigu.

Il est noter que l'on peut prévoir, sur le support 10, de part et d'autre de sa région médiane, des butees telles que 56, 57 (figures 3 et 4) propres à venir coopérer avec la barre transversale 25, au cours de la rotation autour de l'axe longitudinal 25, pour limiter l'amplitude de cette rotation.

Comme visible sur la figure 3, la chape constituant le point d'attache 12 du support 10, et à laquelle est accrochée la biellette 14 peut comporter, dans ses ailes, plusieurs trous 58, superposés, trois par exemple dans le cas de la figure 3, ce qui permet l'accrochage de ladite biellette 14 à la paire de trous la mieux adaptée pour l'outil considéré.

On peut remarquer également qu'au lieu de prévoir une possibilité de rotation du support 10 autour de deux axes 24, 25 ayant des directions différentes, notamment orthogonales, et parallèles ou sensiblement parallèles au sol, on pourrait prévoir une articulation à rotule sphérique située sur la barre 19 à égale distance des point 15 et 16, et propre à coopérer avec un logement complémentaire porte par un support monté sur les points d'accrochage 4 et 5 du tracteur. Dans ce cas, le support 10 aurait une liberté en rotation autour d'une pluralité d'axes parallèles au sol.

Naturellement, au lieu de prévoir un axe 17 sur le support 10 et un alésage 21 sur la barre 22, on pourrait prévoir le montage inverse c'est-à-dire, l'alésage sur le support 10 et l'axe sur la barre 22.

L'exemple décrit précédemment concerne un outil du type poussé qui a tendance à s'enfoncer lorsque la résistance du sol augmente. Le vérin simple effet, en travaillant au raccourcissement, s'oppose à cette tendance à l'enfoncement.

Dans le cas d'un outil qui aurait tendance à se soulever lorsque la résistance du sol augmente, par exemple dans le cas d'un outil du type chisel

[illegible]é ([illegible] poussé) par le tracteur, on pourrait utiliser un vérin double effet, ou un vérin simple effet piloté à l'allongement (l'admission de la pression du fluide provoque alors la sortie de la tige de vérin).

On a considéré essentiellement, dans la description qui précède, un mode de réalisation dans lequel les moyens de liaison J comprennent des moyens de commande S, notamment formés par des vérins, des mouvements de basculement de l'outil.

Il est possible d'envisager d'autres modes de réalisation dans lesquels les moyens de liaison J seraient passifs et formés, par exemple, par des biellettes télescopiques. Dans une telle réalisation, lors du travail de l'outil, les biellettes télescopiques autoriseraient les mouvements de basculement autour des deux axes 24, 25, sans assurer de transfert de charge vers le tracteur; autrement dit, les points 11 et 13 seraient en quelque sorte libres de débattre suivant la droite passant par ces points et le point 28. En position relevée du système de levage C du tracteur, les biellettes télescopiques prendraient leur longueur maximale et viendraient en butée fin de course pour assurer la transmission des efforts pour le levage de l'outil porté par le tracteur.

## Revendications

1. Dispositif d'attelage pour un outil, notamment agricole, destiné à être porté par un tracteur, ledit outil étant muni de moyens d'accrochage (A) à un système de levage (C), du type à trois points, du tracteur, comprenant un support intermédiaire (10) prévu entre le système de levage (C) et les moyens d'accrochage (A) de l'outil, ce support intermédiaire comportant, en partie haute, un point d'accrochage (12) destiné à être relié au point haut (9) des moyens d'accrochage (B) de l'outil et, en partie basse, des moyens d'attache (15, 16) situés vers ses extrémités transversales et destinés à être reliés aux points d'accrochage bas (7, 8) de l'outil, caractérisé par le fait que, d'une part, le support intermédiaire (10) est rigide et comporte, en partie haute, deux points d'accrochage (11, 13) situés aux extrémités transversales et reliés, respectivement, par deux moyens de liaison extensibles au point haut (3) du système de levage (C) du tracteur, ces moyens de liaison étant propres à assurer la transmission des efforts pour le levage de l'outil porté par le tracteur, le point d'accrochage (12) pour l'outil formant un troisième point situé à mi-distance des points extrêmes, que d'autre part, en partie basse, les deux point d'attache (15, 16) sont réalisés d'une manière semblable aux points d'attache classiques du tracteur de telle sorte que les points d'accrochage bas (7, 8) de l'outil (1) peuvent être reçus dans ces points d'attache (15, 16), et que, d'autre part enfin, ledit support (10) comporte, au milieu de sa partie basse, un moyen d'articulation à axe géométrique longitudinal (25) propre à coopérer avec un moyen d'articulation complémentaire solidaire d'une barre transversale (22) supportée rotative autour de son axe géométrique (24) par les deux points bas (4, 5) d'accrochage du système de levage (C) du tracteur, ce moyen d'articulation étant l'unique liaison du support en partie basse, l'ensemble permettant des mouvements de basculement de l'outil autour des deux axes (24, 25).

2. Dispositif selon la revendication 1, caractérisé par le fait que les moyens de liaison (J) comprennent des moyens de commande (S) des mouvements de l'outil d'une manière autonome par rapport au système de levage (C), ces moyens de commande (S) étant combinés avec des moyens (E) sensibles à la position de l'outil (1) par rapport au sol (T) de telle sorte que les informations fournies par ces moyens sensibles (E) soient utilisés pour l'actionnement des susdits moyens de commande (S).

3. Dispositif selon la revendication 1, caractérisé par le fait que les moyens de liaison (J) sont formés par des biellettes télescopiques qui, en position relevée du système de levage (C) prennent leur longueur maximale et viennent en butée fin de course, l'outil étant alors équipé de roues de jauge (35, 36).

4. Dispositif selon l'une quelconque des revendications précédentes, caractérisé par le fait que le moyen d'articulation à axe géométrique longitudinal (25) comprend un axe d'articulation (17) longitudinal, tandis que le moyen d'articulation complémentaire comprend un alésage (20) prévu dans un cylindre (21) solidaire de la barre transversale (22).

5. Dispositif selon la revendication 4, caractérisé par le fait que l'axe d'articulation (17) longitudinal est situé au-dessous de la barre transversale (22).

6. Dispositif selon la revendication 2 ou selon l'ensemble des revendications 2 et 4 ou 5, pour un outil large comportant deux roues de jauge prévues de chaque côté de l'outil, dans le sens transversal, et sur lesquelles s'exerce une partie de la charge générée par l'outil, caractérisé par le fait que les susdits moyens (E) sensibles à la position de l'outil (1) par rapport au sol (T) comprennent, pour chaque roue de jauge (35, 36) un capteur d'effort (39, 40) propre à déterminer les charges portées par la roue, les informations fournies par chaque capteur (39, 40) servant à l'actionnement des moyens de commande (S).

7. Dispositif selon la revendication 6, caractérisé par le fait que les moyens de commande (S) sont propres à intervenir de telle sorte que la charge supportée par chaque roue de jauge (35, 36) reste sensiblement constante et égale à une valeur prédéterminée, notamment réglable, comprise entre un seuil mini et un seuil maxi, la charge supplémentaire étant transférée vers le tracteur, les valeurs de charge adoptées pour chaque roue de jauge (35, 36) étant généralement égales.

8. Dispositif selon la revendication 7, caractérisé par le fait que les moyens de commande (S) comprennent au moins deux moyens de commande élémentaires propres à développer, chacun, une force de commande (F), destinée à être transmise à l'outil (1) ayant une composante (Fl) suivant la direction longitudinale et une composante (Ft) suivant la direction transversale, et au moins deux moyens (E) sensibles à la position de l'outil par rapport au sol et associés aux moyens de commande élémentaires respectifs.

9. Dispositif selon la revendication 8, caractérisé par le fait que les deux moyens élémentaires de commande sont formés par deux vérins (26, 27) dont les axes sont concourants, l'extrémité (29, 30) de ces vérins située vers le point de concours (28) étant reliée à un point haut (3) du système de levage (C) du tracteur, tandis que les deux autres extrémités de ces vérins sont reliées, respectivement, à deux points différents (11, 13) écartés l'un de l'autre suivant la direction transversale, et décalés suivant la direction longitudinale (P) par rapport au susdit point haut (3), les susdits deux points différents (11, 13) étant reliés rigidement entre eux et, lorsque l'outil (1) est attelé, étant reliés rigidement à cet outil.

10. Dispositif selon l'une quelconque des revendications précédentes caractérisé par le fait que le support intermédiaire (10) comporte, en partie haute, trois points d'accrochage (11, 12, 13) rigidement reliés entre eux, les deux points extrêmes (11, 13) dans le sens transversal constituant les points auxquels sont reliés les moyens de liaison (J), tandis que le troisième point d'accrochage (12) généralement situé à mi-distance des deux points extrêmes (11, 13) est relié, notamment par une biellette (14) ou analogue, au point haut (9) des moyens d'accrochage (A) de l'outil, ce support (10) comportant, à sa partie basse, deux autres points d'attache (15, 16), de chaque côté, pour recevoir les deux points d'accrochage bas (7, 8) de l'outil, cette partie basse du support (10) étant montée, dans sa partie médiane, sur les moyens d'articulation (17, 21, 22) autorisant un basculement du support suivant au moins deux directions non parallèles entre elles (24, 25), notamment orthogonales, mais parallèles ou sensiblement parallèles au sol.

11. Dispositif selon l'une quelconque des revendications précédentes, caractérisé par le fait que la liaison entre les extrémités des moyens de liaison (J), situées vers eur point de concours (28), avec le point haut (3) du système de levage (C) du tracteur (2), comprend une pièce secondaire (33), prévue pour être accrochée à ce point haut (3), et comportant deux chapes (31, 32) solidaires l'une de l'autre et formant entre elles un angle correspondant à celui des moyens de liaison (J), lesdites extrémités (29, 30) des moyens de liaison (J) étant accrochées sur ces chapes.

**Patentansprüche**

1. Anbauvorrichtung für ein Gerät, insbesondere für ein landwirtschaftliches Gerät, das von einem Schlepper getragen werden soll, wobei das Gerät Mittel (A) zur Dreipunkt-Aufhängung an einem Hubsystem (C) des Schleppers aufweist, mit einer Zwischenstütze (10), die zwischen dem Hubsystem (C) und den Aufhängungsmitteln (A) des Gerätes vorgesehen ist, wobei die Zwischenstütze im oberen Bereich einen Aufhängungspunkt (12) zur Verbindung mit dem oberen Punkt (9) der Aufhängungsmittel des Gerätes und im unteren Bereich Anbaumittel (15, 16) aufweist, die sich bei ihren Querenden befinden und zur Verbindung mit den unteren Aufhängungspunkten (7, 8) des Geräts dienen,
dadurch gekennzeichnet, daß einerseits die Zwischenstütze (10) starr ist und im oberen Bereich zwei Aufhängungspunkte (11, 13) aufweist, die an den Querenden angeordnet und über zwei verlängerbare Anschlußmittel mit dem oberen Punkt (3) des Hubsystems (C) des Schleppers verbunden sind, wobei diese Anschlußmittel in der Lage sind, die Kraftübertragung zum Anheben des vom Schlepper getragenen Geräts zu gewährleisten und der Aufhängungspunkt (12) für das Gerät einen dritten Punkt bildet, der auf der Hälfte zwischen den äußeren Punkten angeordnet ist,
daß andererseits im unteren Bereich die beiden Anbaupunkte (15, 16) in ähnlicher Weise wie die klassischen Anbaupunkte eines Schleppers derart ausgebildet sind, daß die unteren Aufhängungspunkte (7, 8) des Geräts (1) in diesen Anbaupunkten (15, 16) aufgenommen werden können, und daß ferner die Stütze (10) in der Mitte ihres unteren Bereiches eine Gelenkvorrichtung mit längsverlaufender geometrischer Achse (25) aufweist, die in der Lage ist, mit einer Komplementär-Gelenkvorrichtung zusammenzuwirken, welche mit einer Querstange (22) fest verbunden ist, die um ihre durch die beiden unteren Aufhängungspunkte (4, 5) des Hubsystems (C) des Schleppers verlaufende geometrische Achse (24) drehbar gelagert ist, wobei diese Gelenkvorrichtung die einzige Verbindung der Stütze im unteren Bereich ist und die Anordnung Kippbewegungen des Gerätes um die beiden Achsen (24, 25) erlaubt.

2. Vorrichtung nach Anspruch 1, dadurch gekennzeichnet, daß die Verbindungsmittel (J) mit zwei Einrichtungen (S) versehen sind, die die Bewegungen des Gerätes unabhängig vom Hubsystem (C) steuern und die mit Vorrichtungen (E) kombiniert sind, die auf die Position des Gerätes (1) in bezug auf den Boden (T) derart ansprechen, daß die von diesen empfindlichen Vorrichtungen (E) gelieferten Infomationen zur Betätigung der Steuereinrichtungen (S) verwendbar sind.

3. Vorrichtung nach Anspruch 1, dadurch gekennzeichnet, daß die Verbindungsmittel (J) aus telekopischen Lenkern bestehen, die bei

angehobener Position des Hubsystems (C) ihre maximale Länge erreichen und ihren Auszugs-Endanschlag erreichen, und daß das Gerät mit Tasträdern (35, 36) versehen ist.

4. Vorrichtung nach einem der vorhergehenden Ansprüche, dadurch gekennzeichnet, daß die Gelenkvorrichtung mit längsverlaufender geometrischer Achse (25) eine längsverlaufende Gelenkachse (17) aufweist, während die Komplementär-Gelenkvorrichtung eine Bohrung (20) aufweist, die in einem fest mit der Querstange (22) verbundenen Zylinder (21) vorgesehen ist.

5. Vorrichtung nach Anspruch 4, dadurch gekennzeichnet, daß die längsverlaufende Gelenkachse (17) unterhalb der Querstange (22) angeordnet ist.

6. Vorrichtung nach Anspruch 2 oder der Gruppe der Ansprüche 2 und 4 oder 5, für ein großes Gerät mit zwei Tasträdern, die in Querrichtung an jeder Seite des Gerätes vorgesehen sind und auf die ein Teil der von dem Gerät erzeugten Last einwirkt, dadurch gekennzeichnet, daß die Vorrichtungen (E), die auf die Position des Gerätes (1) in bezug auf den Boden (T) ansprechen, fur jedes Tastrad (35, 36) einen Kraftmeßwertgeber (39, 40) aufweisen, der die von dem Rad getragenen Lasten ermittelt, und daß die von jedem Meßwertgeber (39, 40) gelieferten Informationen zur Betätigung der Steuermittel (S) dienen.

7. Vorrichtung nach Anspruch 6, dadurch gekennzeichnet, daß die Steuermittel (S) derart wirksam sind, daß die von jedem Tastrad (35, 36) getragene Last im wesentlichen konstant und einem vorbestimmten, insbesondere einstellbaren Wert zwischen einem unteren und einem oberen Grenzwert gleich bleibt, daß die zusätzliche Last auf den Schlepper übertragen wird und daß die für jedes Tastrad (35, 36) aufgenommenen Lastwerte im wesentlichen gleich sind.

8. Vorrichtung nach Anspruch 7, dadurch gekennzeichnet, daß die Steuermittel (S) mindestens zwei Elementar-Steuermittel aufweisen, von denen jedes eine zur Übertragung auf das Gerät (1) bestimmte Steuerkraft (F) entwickeln kann, die eine in Längsrichtung verlaufende Komponente (Fl) und eine in Querrichtung verlaufende Komponente (Ft) aufweist, und daß die Steuermittel (S) mit mindestens zwei Vorrichtungen (E) versehen sind, die auf die Position des Gerätes in bezug auf den Boden ansprechen und den jeweiligen Elementar-Steuermitteln zugeordnet sind.

9. Vorrichtung nach Anspruch 8, dadurch gekennzeichnet, daß die beiden Elementar-Steuermittel aus zwei Arbeitszylindern (26, 27) bestehen, deren Achsen konvergieren, wobei das an der Konvergenzstelle (28) angeordnete Ende (29, 30) dieser Zylinder mit einem oberen Punkt (3) des Hubsystems des Schleppers verbunden ist, während die beiden anderen Enden dieser Arbeitszylinder an zwei verschiedenen Punkten (11, 13) befestigt sind, die voneinander in Querrichtung entfernt und in bezug auf den oberen Punkt (3) in Längsrichtung (P) versetzt sind, wobei die zwei verschiedenen Punkte (11, 13) starr miteinander verbunden sind und bei angebautem Gerät (1) starr mit diesem Gerät gekoppelt sind.

10. Vorrichtung nach einem der vorhergehenden Ansprüche, dadurch gekennzeichnet, daß die Zwischenstütze (10) im oberen Bereich drei starr miteinander verbundene Aufhängungspunkte (11, 12, 13) aufweist, wobei die beiden in Querrichtung äußeren Punkte (11, 13) die Punkte bilden, an denen die Verbindungsmittel (J) befestigt sind, während der dritte Aufhängungspunkt (12), der im wesentlichen auf der Hälfte zwischen den beiden äußeren Punkten (11, 13) angeordnet ist, insbesondere durch einen Lenker (14) oder dgl. mit dem oberen Punkt (9) der Aufhängungsmittel (A) des Geräts verbunden ist, wobei die Stütze (10) in ihrem unteren Bereich zwei weitere an beiden Seiten vorgesehene Anbaupunkte (15, 16) zum Aufnehmen der beiden unteren Aufhängungspunkte (7, 8) des Geräts aufweist und dieser untere Bereich der Stütze (10) in seiner Mittelpartie auf den Gelenkvorrichtungen (17, 21, 22) montiert ist, die ein Kippen der Stütze in mindestens zwei nicht zueinander parallelen, insbesondere zueinander rechtwinkligen Richtungen (24, 25) erlauben, welche jedoch parallel oder im wesentlichen parallel zum Boden verlaufen.

11. Vorrichtung nach einem der vorhergehenden Ansprüche, dadurch gekennzeichnet, daß die Verbindung zwischen den bei der Konvergenzstelle (28) angeordneten Enden der Verbindungsmittel (J) mit dem oberen Punkt (3) des Hubsystems (C) des Schleppers (2) ein zweites Teil (33) aufweist, das der Aufhängung an diesem oberen Punkt (3) dient und zwei Gabeln (31, 32) aufweist, die fest miteinander verbunden sind und zwischen sich einen Winkel bilden, der demjenigen der Verbindungsmittel (J) entspricht, wobei die Enden (29, 30) der Verbindungsmittel (J) an diesen Gabeln aufgehängt sind.

## Claims

1. A coupling device for an implement, an agricultural implement in particular, intended to be carried by a tractor, the said implement being provided with means (A) for hitching to a three point type lifting system (C) of the tractor, comprising an intermediate support (10) provided between the lifting system (C) and the hitching means (A) of the implement, this intermediate support comprising in its high portion a hitching point (12) intended to be connected to the high point (9) of the hitching means (B) of the implement, and in its low portion, attachment means (15, 16) situated towards its transverse ends and intended to be connected to to the low hitching points (7, 8) of the implement, characterised in that, on the one hand, the intermediate support (10) is rigid and comprises in its high portion two hitching points (11, 13) situated at the transverse ends and connected respectively by two extensible connection means to the high point (3) of the lifting system (C) of the tractor, these connection means being capable of ensuring the transmission of the forces for the lifting of the implement carried by the tractor, the hitching point (12) for the implement forming a third point situated midway between the end points, that on the other hand, in the low portion, the two attachment points (15, 16) are made in a manner similar to the conventional attachment means of the tractor, in such a way that the low hitching points (7, 8) of the implement (1) can be received in these attachment points (15, 16), and that finally, moreover, the said intermediate support (10) comprises, in the middle of its low portion, an articulation means with a geometrical longitudinal axis (25) capable of cooperating with a complementary articulation means integral with a transverse bar (22) supported for rotation around its geometrical axis (24) by the two low hitching points (4, 5) of the lifting system (C) of the tractor, this articulation means being the only connection for the support in the low portion, the assembly allowing rocking movements of the implement around the two axes (24, 25).

2. A device according to claim 1, characterised in that the connection means (J) comprise means (S) for controlling the movements of the implement in an independent manner in relation to the lifting system (C), these control means (S) being combined with means (E) for sensing the position of the implement (1) in relation to the ground (T), in such a way that the data provided by these sensor means (E) are used for the actuation of the above mentioned control means (S).

3. A device according to claim 1, characterised in that the connection means (J) are formed by telescopic rods which assume their maximum length in the raised position of the lifting system (C) and come into an end of travel stop position, the implement then being fitted with gauge wheels (35, 36).

4. A device according to any one of the preceding claims, characterised in that the articulation means with the geometrical longitudinal axis (25) comprises a longitudinal articulation pin (17), whilst the complementary articulation means comprises a bore (20) provided in a cylinder integral with the transverse bar (22).

5. A device according to claim 4, characterised in that the longitudinal articulation pin (17) is situated below the transverse bar (22).

6. A device according to claim 2 or according to the set of claims 2 and 4 or 5, for a wide implement comprising two gauge wheels provided on either side of the implement in the transverse direction and whereon a portion of the load generated by the implement is exerted, characterised in that the above mentioned means (E) for sensing the position of the implement (1) in relation to the ground (T) comprise for each gauge wheel (35, 36) a force transducer (39, 40) capable of determining the loads carried by the wheel, the data provided by each transducer (39, 40) serving for the actuation of the control means (S).

7. A device according to claim 6, characterised in that the control means (S) are capable of intervening in such a way that the load supported by each gauge wheel (35, 36) remains substantially constant and equal to a predetermined value, adjustable in particular, comprised between a minimum threshold and a maximum threshold, the additional load being transferred towards the tractor, the values of the loads adopted for each gauge wheel (35, 36) being generally equal.

8. A device according to claim 7, characterised in that the control means (S) comprise at least two elementary actuation means each capable of developing an actuation force (F) intended to be transmitted to the implement, having a component (Fl) along the longitudinal direction and a component (Ft) along the transverse direction, and at least two means (E) sensing the position of the implement in relation to the ground, and linked to the respective elementary actuation means.

9. A device according to claim 8, characterised in that the two elementary actuation means are formed by two jacks (26, 27) whose axes are convergent, the ends (29, 30) of these jacks situated towards the point of convergence (28) being connected to a high point (3) of the lifting system (C) of the tractor, whilst the two other ends of these jacks are respectively connected to two different points (11, 13) interspaced from each other along the transverse direction and staggered along the longitudinal direction (P) in relation to the above mentioned high point (3), the two different points (11, 13) mentioned above being rigidly interconnected and when the implement (1) is hitched up, being rigidly connected to this implement.

10. A device according to any one of the preceding claims, characterised in that the intermediate support (10) comprises in the upper portion three rigidly interconnected hitching points (11, 12, 13), the two end points (11, 13) in the transverse direction constituting the points whereto the connection means (J) are connected, whilst the third hitching point (12) generally situated midway between the two end points (11, 13) is connected, in particular by a link rod (14) or similar to the high point (9) of the hitching means (A) of the implement, this support (10) comprising in its low portion, two other attachment points (15, 16) on either side for receiving the two hitching points (7, 8) of the implement, this low portion of the support (10) being mounted in its median portion on the articulation means (17, 21, 22) allowing the support to rock along at least two directions which are not parallel to each other (24, 25), being in particular orthogonal, but parallel or substantially parallel to the ground.

11. A device according to any one of the preceding claims, characterised in that the linkage between the ends of the connection means (J) situated towards their point of convergence (28) with the high point (3) of the lifting system (C) of the tractor (2) comprises a secondary component (33) provided for being hitched to this high point (3) and comprising two fork ends (31, 32) integral with each other and forming between them an angle corresponding to that of the connection means (J), the said ends (29, 30) of the connection means (J) being hitched to these fork ends.

ℓ
2
R
B
A
35
T
36
1
L

FIG. 1

18
12
3
14
J
2
26
52
S
9
C
11
R
27
6
10
24
B
4
19
C
15
13
7
1
A
P
35
39
E
37
38
40
36
16
8
22
17
25
E
5

FIG. 2

IV
32
30
27
58
12
14
A
IV
9
S
J
C
B
6
10
56
24
8
1
5
23
FIG. 3
20
21
22
17
16
25
3
29
26
26a
11
FIG.5
55
E
39
F
37c
37d
41
43
47
42
46
47
48a
51b
52
51a
37
37e
48b
37b
44
54
45
35
53
50b
49
50a

P
2
II
III
33
3
28
38
34
C
32
31
30
29
J
26
S
21
27
23
F
R
27a
Fl
22
Ft
24
13
56
57
26a
A
5
4
10
11
8
7
12
18
B
14
9
6
1
25

FIG. 4